# EUROPÄISCHE PATENTANMELDUNG

(11) **EP 4 707 851 A1**
(43) Veröffentlichungstag der Anmeldung: **11.03.2026**
(21) Anmeldenummer: 24199015.9
(22) Anmeldetag: 06.09.2024
(51) Int. Cl.: G01S 7/40, G01S 13/931

(54) **ANORDNUNG UND VERFAHREN ZUM KALIBRIEREN WENIGSTENS EINES RADARSENSORS EINES FAHRZEUGS**

(71) Anmelder: Hella Gutmann Solutions GmbH, 79241 Ihringen (DE)
(72) Erfinder: Driewer, Adrian, 79224 Umkirch (DE); Turnschek, Stefan, 79282 Ballrechten-Dottingen (DE)
(74) Vertreter: Pfenning, Meinig & Partner mbB

(57) **Zusammenfassung**

Die Erfindung betrifft ein Verfahren und eine Anordnung (11) zum Kalibrieren wenigstens eines Radarsensors (25) eines Fahrzeugs (30), wobei die Anordnung (11) eine Kalibriereinrichtung (1) umfasst, mit:
• einer Reflektorplatte (10) zum Reflektieren von Radarstrahlung des Radarsensors (25), und
• wenigstens einer Kamera (60),
wobei die Anordnung (11) dazu eingerichtet, anhand von der Kamera (60) erfasste Bildinformationen Ausrichtungsinformationen betreffend wenigstens eines von Fahrzeug (30), Radarsensor (25) und Reflektorplatte (10) zu ermitteln und darauf basierend Steuervorgaben für ein aktorisches Bewegen der Reflektorplatte (10) zu erzeugen.

## Beschreibung

Die Erfindung betrifft eine Anordnung und ein Verfahren zum Kalibrieren wenigstens eines Radarsensors eines Fahrzeugs.

In Fahrzeugen und speziell Straßenverkehrsfahrzeugen eingesetzte Assistenzsysteme umfassen oftmals einen Radarsensor. Diese werden in der Regel als Abstandsmessgerät betrieben und messen den Abstand zu einem vorausfahrenden Fahrzeug oder einem in Fahrtrichtung vor dem Fahrzeug liegenden Hindernis. Die Assistenzsysteme können beispielsweise in Abhängigkeit von der Fahrzeuggeschwindigkeit bei Gefahr akustische, optische oder taktile Warnsignale erzeugen und/oder selbsttätig die Bremse des Fahrzeugs betätigen.

Ein Beispiel ist ein "Adaptive Cruise Control", ACC,- Assistenzsystem. Dieses unterstützt den Fahrer, indem es den Verkehr automatisch beobachtet, den Abstand zu vorausfahrenden Fahrzeugen oder im Fahrweg angeordneten Hindernissen mittels des Radarsensors misst und in Abhängigkeit von diesen Messergebnissen die Geschwindigkeit des Fahrzeuges etwa unter Berücksichtigung eines voreingestellten Sicherheitsabstandes regelt. Für den Fall, dass dieser voreingestellte Sicherheitsabstand unterschritten wird, kann selbsttätig ein Bremsvorgang eingeleitet werden oder die Geschwindigkeit anderweitig, etwa durch selbsttätige Rücknahme des Gaspedals reduziert werden.

Andere Beispiele von Assistenzsystemen sind ein Notfallbremsassistent, ein Spurhalteassistent, eine Hinderniserkennung, eine Verkehrsschilderkennung bis hin zu autonom fahrenden Fahrzeugen (Level 1-5).

Im Zusammenhang mit derartigen Assistenzsystemen und mit Radarsensoren allgemein ist es erforderlich, die korrekte Ausrichtung des Radarsensors in regelmäßigen Abständen zu überprüfen, zu vermessen und ggf. zu korrigieren. Andernfalls können ungenaue Messsignale der Radarsensoren zu einer ungenauen Funktionsweise der Assistenzsysteme führen und dadurch die Fahrsicherheit gefährden.

Die DE 20 2015 106 939 U1 offenbart eine Lösung zum Kalibrieren von Radarsensoren, um deren korrekte Ausrichtung und damit deren Messgenauigkeit sicherzustellen. Hierfür wird unter anderem eine winkelverstellbare Platte gelehrt, an der bei Bedarf eine einen Laser tragende ferromagnetische Befestigungsplatte angebracht werden kann. Die Winkelverstellung wird manuell vorgenommen.

Die erforderliche Winkelverstellung derartiger Platten wird in der Regel seitens der Fahrzeughersteller vorgegeben und es können auch mehrere sukzessive Winkelverstellungen mit jeweils anschließenden Kalibriermessungen innerhalb des Kalibriervorgangs eines Radarsensors erforderlich sein.

Es hat sich gezeigt, dass mittels existierender Lösungen nach wie vor ein Verbesserungspotenzial hinsichtlich der erzielbaren Kalibriergenauigkeit und dadurch Messgenauigkeit von fahrzeuggebundenen Radarsensoren existiert.

Demnach stellt sich die Erfindung die Aufgabe, die Kalibriergenauigkeit und dadurch Messgenauigkeit von fahrzeuggebundenen Radarsensoren weiter zu verbessern.

Diese Aufgabe wird durch die Gegenstände der beigefügten unabhängigen Ansprüche gelöst. Vorteilhafte Ausführungsformen sind in dieser Beschreibung, in den Figuren und in den abhängigen Ansprüchen angegeben.

Entsprechend wird eine Anordnung zum Kalibrieren wenigstens eines Radarsensors eines Fahrzeugs vorgeschlagen, wobei die Anordnung eine Kalibriereinrichtung umfasst, mit:
- einer Reflektorplatte zum Reflektieren von Radarstrahlung des Radarsensors, und
- wenigstens einer Kamera,
wobei die Anordnung dazu eingerichtet ist, anhand von der Kamera erfassten Bildinformationen Ausrichtungsinformationen betreffend wenigstens eines von dem Fahrzeug, dem Radarsensor und der Reflektorplatte zu ermitteln und darauf basierend Steuervorgaben für ein aktorisches Bewegen der Reflektorplatte zu erzeugen.

Eine gattungsgemäße Reflektorplatte wird seitens der Anmelderin als Bestandteil des sogenannten "Radar Kit 1 EVO" vertrieben, wobei diese Reflektorplatte jedoch bisher ausschließlich manuell bewegbar.

Die Reflektorplatte kann mittels eines Haltegestells der Kalibriereinrichtung gegenüber einem Untergrund abgestürzt und/oder in einem definierten Abstand zu diesem gehalten werden.

Das Haltegestell kann optional auf einem Fahrgestell angeordnet sein, um entlang des Untergrunds verschoben zu werden. Der Untergrund kann insbesondere ein Werkstattboden und/oder allgemein eben sein. Das Haltegestell kann sich relativ zu dem Untergrund aufrecht und insbesondere räumlich vertikal erstrecken. Das Haltegestell kann dazu eingerichtet sein, die Reflektorplatte in einem festen oder optional variierbaren Abstand relativ zum Untergrund zu tragen. Das Haltegestell kann allgemein dazu eingerichtet sein, die Reflektorplatte vor einer Fahrzeugfront zu positionieren und insbesondere auf Höhe der Scheinwerfer und/oder einer Stoßstange und/oder eines Kühlergrills zu positionieren, was jeweils einer typischen Einbauhöhe von Radarsensoren entspricht.

Die Ermittlung der Ausrichtungsinformationen und das Erzeugen der Steuervorgaben kann in einer Steuereinrichtung der Kalibriereinrichtung erfolgen. Alternativ kann dies in einer in Bezug auf die Kalibriereinrichtung externen Diagnosevorrichtung erfolgen. Auch können diese Maßnahmen oder auch jeweilige Teilschritte hiervon zwischen der genannten Steuereinrichtung und der externen Diagnosevorrichtung aufgeteilt werden, wobei die Steuereinrichtung und externe Diagnosevorrichtung insbesondere miteinander kommunizieren können. Die Anordnung gemäß einer Ausführungsform auch die externe Diagnosevorrichtung umfassen oder mit dieser kommunikativ verbunden sein.

Unter einer Ausrichtung kann hierin allgemein eine Position und/oder Lage (d. h. Orientierung) verstanden werden. Die Ausrichtungsinformationen können wenigstens einen Positionswert und/oder Lagewert umfassen. Vorzugsweise wird aber die vollständige räumliche Ausrichtung, d. h. die vollständige Position und vollständige Lage, als Teil der Ausrichtungsinformationen ermittelt, zum Beipsiel in Bezug auf ein kartesisches räumliches Koordinatensystem. Zusätzlich oder alternativ können die Ausrichtungsinformationen Relativausrichtungen, insbesondere wiederum umfassend die vollständige relative Position und vollständige relative Lage, zwischen wenigstens zwei von dem Fahrzeug, dem Radarsensor und der Reflektorplatte umfassen.

Mittels der hier offenbarten Lösung ist die Anordnung selbstständig in der Lage, eine für eine präzise Kalibriermessung einzunehmende oder allgemein vorgegebene Ausrichtung der Reflektorplatte einzustellen und insbesondere einzuregeln. Dies betrifft vorzugsweise sowohl eine automatisch durchgeführte Translation der Reflektorplatte als auch eine automatische Verkippung oder auch Winkelverstellung von dieser. Mittels der Kamera können hierfür erforderliche Justierbewegungen, insbesondere sowohl translatorische als auch rotatorische bzw. verkippende Bewegungen ermittelt und vorzugsweise auch automatisiert umgesetzt werden. Iterative und/oder manuelle Nachjustierung seitens eines Bedieners können entfallen oder signifikant reduziert werden. Folglich können auch damit einhergehende Fehlerpotenziale reduziert werden. Insgesamt kann also der Automatisierungsgrad und auch allgemein die Genauigkeit beim Durchführen der hier geschilderten Kalibriervorgänge erhöht werden.

Die automatisierten Bewegungen können sowohl das Durchführen von Kalibiermessungen z.B. durch Einstellen und Variieren von Lagewinkeln der Reflektorplatte betreffen, als auch deren Vorbereitung. Letzteres kann Bewegungen zum Auffinden und Einstellen einer vorgegebenen Ausrichtung von der Reflektorplatte relativ zum Radarsensor umfassen.

Gemäß einer Weiterbildung ist die Kamera ortsfest relativ zu der Reflektorplatte. Hierunter kann verstanden werden, dass die räumliche Position der Kamera relativ zu der Reflektorplatte und insbesondere einem geometrischen Zentrum hiervon unveränderlich ist. Dies kann ein Ermitteln der räumlichen Ausrichtung der Reflektorplatte insbesondere relativ zur Kamera erleichtern.

Gemäß einer Weiterbildung ist die Kamera außerhalb der Reflektorplatte angeordnet ist und/oder für ein Erfassen von derselbigen eingerichtet. Beispielsweise kann die Kamera aus Fahrzeugsicht rückseitig von der Reflektorplatte angeordnet sein und/oder zumindest ein Teil von deren Rückseite erfassen. Dies reduziert etwaige Anpassungen an bestehenden Gestaltungen einer Reflektorplatte und/oder vereinfacht ein Nachrüsten der Kamera an bestehenden Systemen.

Gemäß einer Weiterbildung umfasst die Anordnung ferner wenigstens einen Kippaktor, der dazu eingerichtet ist, nach Maßgabe der Steuervorgaben eine Winkelposition der Reflektorplatte um wenigstens eine Achse einzustellen. Wie auch jeglicher sonstiger hier offenbarte Aktor kann der Kippaktor einen Elektromotor umfassen oder einen anders ausgebildeten Aktor, wie beispielsweise einen hydraulischen oder pneumatischen Zylinder.

Die Steuervorgaben können insbesondere einer automatisierten Einstellung einer geeigneten Winkelposition oder sämtlicher räumlicher Winkelpositionen für das Durchführen der Kalibriermessung dienen.

Der Kippaktor kann von einem Kippmechanismus umfasst sein, der noch wenigstens einen weiteren Kippaktor zum Verkippen der Reflektorplatte entlang wenigstens einer weiteren Achse umfasst. Die somit insgesamt vorliegenden zwei Kippbewegungsachse können orthogonal zueinander verlaufen. Auch ein dritter Kippaktor kann von dem Kippmechanismus umfasst sein, um insgesamt eine Verkippungund sämtliche räumlichen (Kipp-) Freiheitsgrade zu ermöglichen, also insbesondere um drei orthogonal zueinander verlaufende Kippbewegungsachse.

Bei einer Ausführungsform ist die Reflektorplatte mittels des Kippaktors relativ zu der Kamera verkippbar. Die Kamera kann sich hingegen durch eine feste räumliche Lage auszeichnen. Dies kann den Auswertungsaufwand der hiervon erfassten Bilder und/oder die allgemeine Systemkomplexität der Kalibriereinrichtung reduzieren.

Die Anordnung kann, zusätzlich oder alternativ, wenigstens einen Verschiebungsaktor umfassen, der dazu eingerichtet ist, die Kamera und/oder die Reflektorplatte entlang wenigstens einer Achse zu verschieben. Allgemein kann der Verschiebungsaktor dazu eingerichtet sein, die Reflektorplatte zu transferieren, während der Kippaktor dazu eingerichtet sein kann, die Reflektorplatte zu rotieren.

Die Verschiebungen können insbesondere einer automatisierten Einstellung einer geeigneten Position oder von Ortskoordinaten der Reflektorplatte und insbesondere von deren vollständigen Ortskoordinaten für das Durchführen einer Kalibriermessung dienen.

Gemäß einer Variante ist der Verschiebungsaktor von einem Linearverschiebungsmechanismus umfasst, der noch wenigstens einen weiteren Verschiebungsaktor zum Verschieben der Reflektorplatte und/oder Kamera entlang wenigstens einer weiteren Achse umfassen kann. Die somit insgesamt vorliegenden zwei Linearbewegungsachsen können orthogonal zueinander verlaufen. Auch ein dritter Verschiebungsaktor kann von dem Linearverschiebungsmechanismus umfasst sein, um insgesamt eine Verschiebung und sämtliche räumlichen linearen Freiheitsgrade zu ermöglichen, also insbesondere um drei orthogonal zueinander verlaufende Linearbewegungsachsen.

Gemäß einer Variante sind der Linearverschiebungsmechanismus und der Kippmechanismus separat voneinander ausgebildet und/oder separat ansteuerbar und/oder umfassen jeweils eigene Aktoren. Der Kippmechanismus kann in einer Ausführungsform von dem Linearverschiebungsmechanismus verschiebbar sein. Der Linearverschiebungsmechanismus kann in einer Ausführungsform von dem Kippmechanismus kippbar und/oder drehbar sein.

Gemäß einer Variante sind der Linearverschiebungsmechanismus und der Kippmechanismus zumindest teilweise ineinander integriert und/oder werden als ein gemeinsamer Bewegungsmechanismus realisiert. Zum Beispiel kann die Reflektorplatte mittels eines Gelenkarms und insbesondere eines Knickarms in insbesondere allen sechs räumlichen Freiheitsgraden bewegbar sein. Der Gelenkarm oder Knickarm sind jeweils Beispiele des vorstehend genannten Bewegungsmechanismus. Die Drehgelenke eines solchen Gelenkarms oder Knickarms können sowohl als Verschiebungsaktoren als auch als Kippaktoren verstanden werden.

Bei einer Ausführungsform sind die Kamera und die Reflektorplatte mittels des Verschiebungsaktors gemeinsam verschiebbar, insbesondere parallel zu einem Untergrund und/oder entlang einer gegenüberliegenden Fahrzeugseite.

Auch eine voneinander unabhängige Verschiebbarkeit von Kamera und Reflektorplatte zum Beispiel mit jeweils individuell zugeordneten Aktoren kann vorgesehen sein. Beispielweise kann die Kamera unabhängig von der Reflektorplatte in nachstehend erläuterte erste und zweite Positionen zum Erfassen von mit Fahrzeugrädern gekoppelten Targets bewegbar sein.

Die Anordnung kann optional ferner wenigstens ein von der Kamera erfassbares Target umfassen, das an dem Fahrzeug und/oder an dem Radarsensor anbringbar ist.

Gemäß einer Weiterbildung ist die Steuereinrichtung ferner dazu eingerichtet, anhand der Bildinformationen auch wenigstens eine der folgenden Informationen zu ermitteln:
- einen Fahrzeughersteller, zum Beispiel durch Erfassen eines Herstelleremblems;
- einen Fahrzeugtyp, zum Beispiel durch Erfassen vorbestimmter Merkmale und insbesondere vorbestimmter Konturen;
- ein Fahrzeugkennzeichen;
- eine geometrische Fahrachse des Fahrzeugs, zum Beispiel durch Erfassen der Positionen von Fahrzeugrädern und insbesondere von Radnaben an beiden Enden einer Fahrzeugachse;
- einen Abstand zwischen der Reflektorplatte und dem Radarsensor.

Die Erfindung betrifft auch ein Verfahren zum Kalibrieren wenigstens eines Radarsensors eines Fahrzeugs mittels einer Reflektorplatte zum Reflektieren von Radarstrahlung des Radarsensors, wobei das Verfahren aufweist:
- Erfassen von Bildinformationen mittels einer Kamera;
- Ermitteln von Ausrichtungsinformationen betreffend das Fahrzeug und/oder den Radarsensor und/oder die Reflektorplatte anhand der Bildinformationen;
- aktorisches Bewegen der Reflektorplatte nach Maßgabe der Ausrichtungsinformationen.

Auch in diesem Fall erfolgt das aktorische Bewegen vorzugsweise automatisiert, insbesondere sowohl hinsichtlich einer Translation als auch Rotation. Insbesondere können sämtliche Bewegung der Reflektorplatte und auch der Kamera im Kontext der Kalibrierung vollautomatisert aktorisch umgesetzt werden.

Gemäß einer Weiterbildung umfasst das aktorische Bewegen ein Verkippen der Reflektorplatte um wenigstens eine Achse und insbesondere um alle drei Achsen eines räumlichen kartesischen Koordinatensystems.

Gemäß einer Weiterbildung umfasst das aktorische Bewegen ein Verschieben der Reflektorplatte entlang wenigstens einer Achse und insbesondere um alle drei Achsen eines räumlichen kartesischen Koordinatensystems.

Gemäß einer Weiterbildung wird die Kamera zum Erfassen der Bildinformationen zwischen einer ersten Position und wenigstens einer zweiten Position bewegt. Insbesondere erfasst die Kamera in der ersten Position Bildinformationen von einer ersten Fahrzeugseite und/oder einem dort angeordneten Target und in der in der zweiten Position Bildinformationen von einer zweiten Fahrzeugseite und/oder einem dort angeordneten Target. Das Target kann ein optisch erfassbares Target gemäß jeglicher hier offenbarten Variante sein.

Gemäß einer Weiterbildung wird anhand der Bildinformationen auch wenigstens eine der folgenden Informationen ermittelt:
- ein Fahrzeughersteller,
- ein Fahrzeugtyp,
- ein Fahrzeugkennzeichen,
- eine geometrische Fahrachse des Fahrzeugs,
- einen Abstand zwischen der Reflektorplatte und dem Radarsensor.

Sämtliche weiteren Ausführungsformen und Varianten, die im Kontext der hier offenbarten Vorrichtung erläutert werden, können auch im Kontext des Verfahrens gelten, und umgekehrt. Dies betrifft insbesondere gleichlautende oder vergleichbare Merkmale.

Beispielhafte Ausführungsformen der Erfindung werden im Folgenden anhand der schematischen Figuren erläutert.
- Figur 1: zeigt eine Vorrichtung gemäß einer Ausführungsform der Erfindung, welche ein erfindungsgemäßes Verfahren ausführt, in einer Seitenansicht.
- Figur 2: zeigt die Vorrichtung aus Figur 1 in einer Frontalansicht.
- Figur 3: eine Ablaufschema eines erfindungsgemäßen Verfahrens.

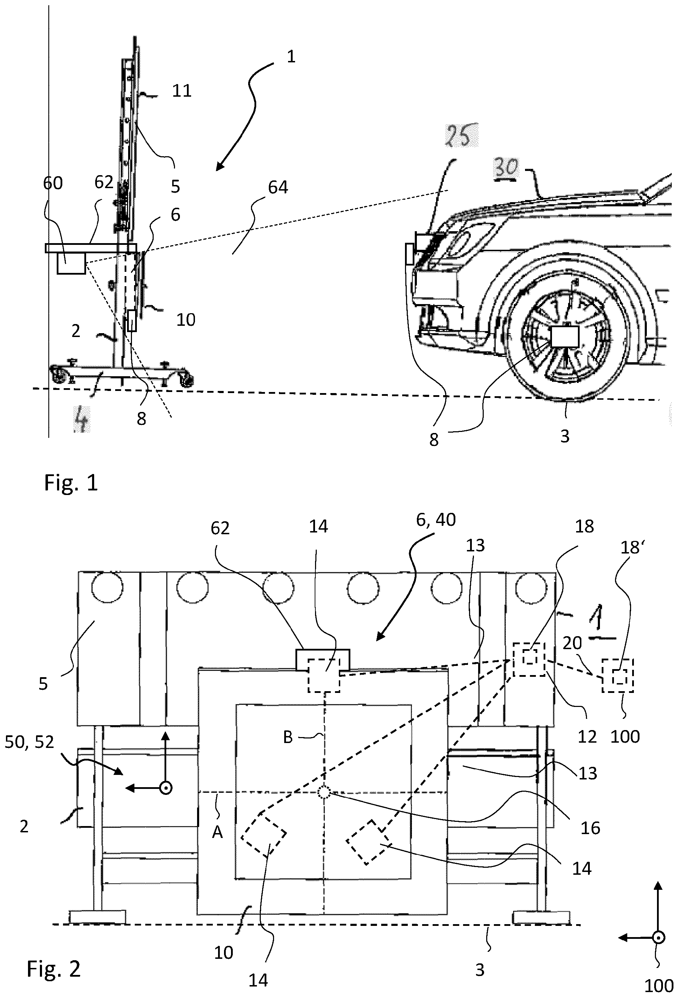

Figur 1 zeigt eine Anordnung 11 gemäß einer Ausführungsform der Erfindung. Die Anordnung 11 umfasst eine nachfolgend erläuterte Kalibriereinrichtung 1 und optional auch eine Diagnosevorrichtung 100 (siehe Figur 2). Die Kalibriereinrichtung 1 wird zum Kalibrieren eines Radarsensors 25 in einem teilweise dargestellten Fahrzeugs 30 verwendet wird. Das Fahrzeug 30 ist ein Kraftfahrzeug und insbesondere ein Straßenfahrzeug, wie zum Beispiel ein Personenkraftwagen (dargestellt) oder ein Lastkraftwagen (nicht dargestellt). Der Radarsensor 25 ist in einer Fahrzeugfront montiert, sodass die Kalibriereinrichtung 1 gegenüberliegend und parallel zu der Fahrzeugfront und genauer gesagt orthogonal zu einer nicht gesondert dargestellten Fahrzeuglängsachse ausgerichtet ist.

Die offenbarte Lösung ist nicht auf in oder nahe der Fahrzeugfront montierte Radarsensoren 25 beschränkt. Dies ist lediglich ein Beispiel und es können auch zum Beispiel in oder nahe eines Fahrzeughecks verbaute Radarsensoren 25 kalibriert werden.

Die Kalibriereinrichtung 1 umfasst ein Haltegestell 2, dessen genaue Ausbildung nicht eingeschränkt ist und das aufrecht auf einem Untergrund 3 steht, insbesondere auf einem Werkstattboden. Beispielhaft umfasst das Haltegestell 2 ein optionales Fahrgestell 4, um relativ zu dem Fahrzeug 30 bewegt werden zu können. Die Haltegestell 2 trägt in einem oberen Bereich eine optionale Kalibriertafel 5 für ein Kalibrieren von nicht dargestellten Fahrzeug-Kamerasensoren mittels bekannter Techniken. Das Haltegestell 2 kann auch ohne eine solche Kalibriertafel 5 ausgebildet sein und insbesondere rein dem Kalibrieren von Radarsensoren 25 dienen.

Für den letztgenannten Zweck umfasst die Kalibriereinrichtung 1 eine Reflektorplatte 10, die eine allgemein ebene und insbesondere glatte Oberfläche aufweist. Die Reflektorplatte 10 ist dem Fahrzeug 30 zugewandt, um von dem Radarsensor 25 ausgehende Radarstrahlung zu reflektieren. Die Reflektorplatte 10 entspricht mit Ausnahme ihrer erfindungsgemäßen aktorischen Verstellbarkeiten einem Bespiel des Standes der Technik.

In Figur 1 ist eine bewegliche Ankopplung 6 der Reflektorplatte 10 an das Haltegestell 2 nur äußerst schematisch angedeutet. Die bewegliche Ankopplung 6 ermöglicht ein aktives Bewegen der Reflektorplatte 10 relativ zu dem Haltegestell 2 in sämtlichen sechs räumlichen Freiheitsgraden. Diesbezügliche Details werden nachstehend anhand von Figur 2 erläutert.

Figur 2 zeigt eine Frontalansicht der Kalibriereinrichtung 1, beispielsweise aus Sicht des Fahrzeugs 30 und/oder des Radarsensors 25 aus Figur 1. Nur ein Teil der grundsätzlich optionalen Kalibriertafel 5 ist dargestellt und diese könnte auch gänzlich weggelassen werden.

Die Größenverhältnisse in den Figuren 1 und 2 und insbesondere bei einem Vergleich dieser Figuren 1, 2 sind hinsichtlich der Kalibriereinrichtung 1 schematisch stark vereinfacht. Zum Beispiel ist die Größe der Reflektorplatte 10 in Figur 2 im Vergleich zu Figur 1 deutlich überhöht dargestellt, wobei diese Größe an sich nicht wesentlich ist und gemäß existierenden Lösungen gewählt sein kann. Auch ein Abstand der Reflektorplatte 10 zum Untergrund 3 weicht in den Figuren 1 und 2 voneinander ab, ohne dass dies für die Erfindung wesentlich oder allgemein einschränkend ist. Prinzipiell kann dieser Abstand beliebig gewählt und/oder geeignet an eine Höhe des Radarsensors 25 angepasst werden.

Der beweglichen Ankopplung 6 umfasst einen Kippmechanismus 40, mittels dem die Reflektorplatte 10 gemäß sämtlicher räumlichen Freiheitsgrade verkippbar ist, und einen Linearverschiebungsmechanismus 50, mittels dem die Reflektorplatte 10 gemäß sämtlicher räumlichen Freiheitsgrade verschiebbar oder, mit anderen Worten, translierbar ist.

In dem gezeigten Beispiel sind der Kippmechanismus 40 und der Linearverschiebungsmechanismus 50 als unabhängig voneinander betreibbare und/oder unabhängig voneinander ansteuerbare Einheiten ausgebildet. Genauer gesagt ist der Linearverschiebungsmechanismus 50 dazu eingerichtet, den Kippmechanismus 40 mitsamt der daran angekoppelten Reflektorplatte 10 linear im Raum zu verschieben, wohingegen mittels des entsprechend positionierten Kippmechanismus 40 die Winkelpositionen der Reflektorplatte 10 eingestellt werden können. Auch eine umgekehrte Variante ist gemäß Ausführungsformen möglich, bei der der Kippmechanismus 40 den Linearverschiebungsmechanismus 50 als solches geeignet verkippt, wohingegen der entsprechend verkippte Linearverschiebungsmechanismus 50 die damit gekoppelte und gemeinsam verkippte Reflektorplatte 10 geeignet transliert.

Ferner sind auch ineinander integrierte oder kombinierte Linearverschiebungs- und Kippmechanismen möglich, beispielsweise in Form eines Gelenkarms oder auch Knickarms und/oder eines Hexapodmechanismus.

Als Bestandteile des Kippmechanismus 40 sind drei Kippaktoren 14 schematisch angedeutet. Diese befinden sich an der vom Betrachter abgewandten Rückseite der Reflektorplatte 10, wie durch deren gestrichelte Umrisse angedeutet. Die angedeuteten Positionen sind lediglich beispielhaft. Auch andere Positionen der Aktoren 14 sind möglich, insbesondere auch in zumindest teilweise einander überdeckender Form.

Die Reflektorplatte 10 ist mittig an einem Kugelgelenk 16 gelagert und mittels diesem in sämtlichen räumliche Freiheitsgraden verkippbar, insbesondere um sämtliche Achsen eines in Figur 2 angedeuteten kartesischen Raumkoordinatensystems 100. Bei diesem ist eine Achse vertikal aufrecht, d.h. entlang der Wirkrichtung der Gravitationskraft ausgerichtet.

Die Kippaktoren 14 sind zum Beispiel Linearaktoren, die außermittig mit der Rückseite der Reflektorplatte 10 verbunden sind und dazu eingerichtet sind, orthogonal zur Blattebene verlaufende Kräfte darauf aufzubringen. Dies erfolgt vorzugsweise sowohl in einer dem Betrachter zugewandten als auch in einer von diesem abgewandten Richtung. Die Bewegungen der Kippaktoren 14 bzw. die hiervon aufgebrachten Kräfte können derart koordiniert werden, dass die Reflektorplatte 10 zumindest in definierten Winkelbereichen um jede der Achsen des Koordinatensystems 100 beliebige Winkelpositionen einnehmen kann. Beispielhaft angedeutet sind eine Neigungsachse A und Gierachse B, um die die Reflektorplatte 10 verkippt werden kann.

Die Aktoren 14 sind vorzugsweise individuell ansteuerbar, wobei diese Ansteuerung jedoch in der geschilderten Weise koordiniert erfolgen kann. Die Aktoren 14, wie auch nachstehend erläuterte Verschiebungsaktoren, sind zum Beispiel Elektromotoren oder werden pneumatisch oder hydraulisch betrieben.

Beispielhafte und nicht einschränkende alternative Varianten zum Ermöglichen einer aktorischen Verkippung der Reflektorplatte 10 um sämtliche Raumachsen umfassen ein Anordnen der Reflektorplatte 10 an einem dreiachsigen Kippmodul oder mit anderen Worten: einer dreiachsigen Kippeinheit, einem dreiachsigen Kipptisch oder einer dreiachsigen Kippbühne. Diese können beispielsweise unter der Reflektorplatte 10 angebracht sein und durch Aktoren 14 zum Ausführen der entsprechenden Kippbewegungen bewegt werden. Auch ein Hexapodmechanimus oder Gelenkarm sind als alternative Varianten möglich.

Die bewegliche Ankopplung 6 umfasst auch einen Linearverschiebungsmechanismus 50, der sehr schematisch mittels eines Bewegungsachsen-Koordinatensystems 52, das die Ausrichtung von dessen Bewegungsachsen anzeigt, angedeutet ist. Die Position dieses Koordinatensystems 52 ist schematisch und nicht einschränkend. Der Linearverschiebungsmechanismus 50 kann beispielsweise ebenfalls rückseitig an der Reflektorplatte 10 angebracht und somit bei einer Frontalansicht wie in Figur 2 größtenteils verdeckt sein.

In dem gezeigten Beispiel trägt der Linearverschiebungsmechanismus 50 den Kippmechanismus 40. Das Kugelgelenk 16 ist beispielsweise an einer nicht gesondert dargestellten Bewegungsachse des Linearverschiebungsmechanismus 50 befestigt.

Schematisch angedeutet ist, dass der Linearverschiebungsmechanismus 50 eine Verschiebung des Kippmechanismus 40 bzw. der Reflektorplatte 10 entlang sämtlicher Raumachsen des Koordinatensystems 100 ermöglicht. Hierfür kann der Linearverschiebungsmechanismus 50 beispielsweise nach Art eines zweidimensionalen Bewegungsschlittens und/oder zweidimensionalen Bewegungstisches und/oder eines Kreuztisches konfiguriert sein, insbesondere jeweils kombiniert mit einer zusätzlichen Hubachse. Derartige Systeme sind aus der CNC-Technik, der Koordinatenmesstechnik oder von 3D-Druckern bekannt, zum Beispiel in Form sogenannter Portalkinematiken. Der Linearverschiebungsmechanismus 50 umfasst beispielhaft einen nicht gesondert dargestellten Verschiebungsaktor für eine jede von dessen Bewegungsachse.

Die anhand von Fig. 2 erläuterten Konfigurationen des Linearverschiebungsmechanismus 50 sind nur ein Beispiel. Der Linearverschiebungsmechanismus 50 kann auch andres angeordnet sein und z.B. das gesamte Haltegestell 2 tragen und im Raum entlang sämtlicher Achsen des Koordinatensystem 100 verschieben. In diesem Fall umfasst die bewegliche Ankopplung 6 lediglich den Kippmechanismus 40.

Die Kalibriereinrichtung 1 umfasst ferner eine Steuereinrichtung 12, beispielsweise umfassend wenigstens einen Prozessor zum Umsetzen und/oder Ausführen von Rechenschritten nach Art eines Computers. Die Steuereinrichtung 12 ist über Signalverbindungen 13 signal- und insbesondere datenübertragend mit den Aktoren 14 verbunden. Diese Übertragung kann insbesondere kabelgebunden erfolgen.

Zusätzlich oder alternativ können nicht gesondert dargestellte Signalverbindungen vorgesehen sein, um an die Verschiebungsaktoren entsprechende Steuersignale auszugeben.

Insgesamt ist die Steuereinrichtung 12 somit dazu eingerichtet, eine Ausrichtung der Reflektorplatte 10 bezüglich sämtlicher sechs räumlichen Freiheitsgrade vorzugeben (drei translatorische entlang der Achsen des dargestellten Koordinatensystems 100 und drei rotatorische um eben diese Achsen).

Die Steuereinrichtung 12 ist ferner mit einer externen Diagnoseeinrichtung 100 verbunden, d. h. extern Bezug auf die Kalibriereinrichtung 1. Hierfür umfassen die Steuereinrichtung 12 und die Diagnosevorrichtung 100 jeweils eine Kommunikationsschnittstelle 18, 18', beispielsweise eine WLAN- (Wireless Local Area Network) oder Bluetooth-Schnittstelle. Zwischen diesen kann eine Signal- und insbesondere Datenübertragung über eine kabelgebundene oder kabellose Kommunikationsverbindung 20 aufgebaut werden. Die Diagnosevorrichtung 100 umfasst beispielsweise wenigstens einen Prozessor zum Umsetzen und/oder Ausführen von Rechenschritten nach Art eines Computers.

Gemäß einer optionalen Betriebsart erhält die Steuereinrichtung 12 von der Diagnosevorrichtung 100 über die Kommunikationsverbindung 20 Angaben, beispielsweise in Form von Kalibrierparametern, betreffend eine einzustellende räumliche Ausrichtung der Reflektorplatte 10, insbesondere relativ zu dem Radarsensor 25. Anschließend steuert die Steuereinrichtung 12 über eine der Signalverbindungen 13 wenigstens einen Aktor 14 des Kippmechanismus 40 oder wenigstens einen Aktor des Linearverschiebungsmechanismus 50 zum Einstellen der räumlichen Positionen und räumlichen Lage (d. h. der räumlichen Ausrichtung) der Reflektorplatte 10 an.

Neben der geschilderten aktorischen Beweglichkeit der Reflektorplatte 10 zeichnet sich die hier offenbarte Lösung durch eine kamerabasierte Erfassung der Ausrichtung der Reflektorplatte 10 aus. Dies ermöglicht insbesondere eine Art selbstregelnde Ausrichtung der Reflektorplatte 10. Hierdurch kann die Reflektorplatte 10 zusätzlich oder alternativ zu etwaigen von der Diagnosevorrichtung 10 erhaltenen Ausrichtungsvorgaben der Reflektorplatte 10 ausgerichtet werden. Beispielsweise kann durch die kamerabasierte Erfassung überprüft und sichergestellt werden, ob bzw. dass eine vorgegebene Ausrichtung tatsächlich umgesetzt wird.

Zunächst bezugnehmend auf Figur 1 ist gezeigt, dass die Kalibriereinrichtung 1 auch wenigstens eine Kamera 60 umfasst. Diese ist mittels eines optionalen Haltearms 62 gehalten. Der Haltearm 62 ist rückseitig nahe der Reflektorplatte 10 angeordnet und die Kamera 60 liegt der Rückseite der Reflektorplatte 62 gegenüber. Folglich ist die Kamera 60 in Figur 2 verdeckt. Der Haltearm 62 ist in Figur 2 jedoch schematisch angedeutet, wobei dessen beispielhaft dargestellte Position relativ zur Reflektorplatte 10 nicht einschränkend ist.

Die Kamera 60 und der Haltearm 62 sind derart mit dem Linearverschiebungsmechanismus 50 gekoppelt, dass diese gemeinsam mit der Reflektorplatte 10 entlang der Bewegungsachse 52 verfahrbar sind. Beispielsweise ist der Haltearm 62 an einem zur Reflektorplatte 10 nächstem kinematischen Glied des Linearverschiebungsmechanismus 50 befestigt, an dem optional auch das Kugelgelenk 16 befestigt ist. Die Kamera 60 ist somit ortsfest relativ zur Reflektorplatte 10. Andererseits ist die Reflektorplatte 10 relativ zur Kamera 60 verkippbar, und zwar gemäß sämtlichen Freiheitsgraden des Kippmechanismus 40.

Die Kamera 60 ist allgemein dazu eingerichtet, optische Targets 8 zu erfassen, die sich in ihrem schematisch angedeuteten Erfassungsbereich 64 befinden. Die erfassten Bilddateien können zur Auswertung an die Steuereinrichtung 12 der Kalibriereinrichtung 1 oder an eine andere, beispielsweise speziell für die Kamera 60 vorgesehene Auswertungseinrichtung ausgegeben werden (nicht dargestellt). Eine hierfür vorgesehene insbesondere kabelgebundene Signalleitung ist nicht gesondert dargestellt.

In Figur 1 ist ein optisches Target 8 angedeutet, dass an einem Fahrzeugrad und insbesondere dessen Radnabe angebracht ist. Derartige optische Targets 8 werden in vergleichbaren Kalibrierkontexten bereits verwendet und umfassen optisch erfassbare Muster, anhand derer die räumliche Ausrichtung des Targets und/oder einer geometrischen Fahrachse des Fahrzeugs ermittelbar sind. Beispielhaft wird auf die vorbekannte Offenbarung DE 10 2015 112 368 A1 der Anmelderin verwiesen.

Bei der gezeigten Lösung werden optische Targets 8 beidseitig an beiden Fahrzeugrädern einer Fahrzeugachse angebracht. Die Kamera 60 wird mittels des Linearverschiebungsmechanismus 50 in geeignete Positionen bewegt, um mit dieser beidseitig und genauer gesagt auf beiden Fahrzeugseiten angebrachte optische Targets 8 zu erfassen. In an sich bekannter Weise kann hierdurch eine geometrische Fahrachse des Fahrzeugs 30 ermittelt werden.

Ein weiteres optisches Target 8 ist zumindest temporär an oder nahe des Radarsensors 25 angebracht, insbesondere in einer definierten Relativausrichtung zu dem Radarsensor 25. Ein noch weiteres optisches Target 8 ist rückseitig an der Reflektorplatte 10 angebracht.

Die Kamera 60 kann durch Erfassen sämtlicher dieser optischen Targets 8 die räumliche Ausrichtung der Reflektorplatte 10, des Radarsensors 25 und des Fahrzeugs 30 bzw. dessen geometrischer Fahrachse bestimmen und/oder deren Relativausrichtungen. Sämtliche dieser Ausrichtungen sind Beispiele von Ausrichtungsinformationen im Sinne dieser Offenbarung.

Anhand der auf diese Weise gewonnenen Informationen kann die Reflektorplatte 10 zum Beispiel geeignet relativ zu der geometrischen Fahrzeugachse ausgerichtet werden, insbesondere orthogonal hierzu. Hierfür können mittels des Kippmechanismus 40 geeignete Winkellagen eingestellt werden.

Ferner können anhand der optischen Targets 8 an den Fahrzeugrädern und/oder an dem Radarsensor 25 Abstände und/oder Höhen der Reflektorplatte 10 insbesondere relativ zu dem Radarsensor 25 eingestellt werden. Hierfür kann der Linearverschiebungsmechanismus 50 geeignet angesteuert werden. Existierende Abstände können zum Beispiel anhand einer Größe eines optischen Targets in einem erfassten Kamerabild bestimmt werden. Höhenunterschiede können, insbesondere bei bekannter Kameraposition, aus Positionskoordinaten eines Targets in einer erfassten Bilddatei ermittelt werden.

Die Kamera 60 kann alternativ oder zusätzlich zu den optischen Targets 8 auch ein Kennzeichen und/oder ein Herstelleremblem des Fahrzeugs 30 erfassen, um beispielsweise einen Abstand relativ zur Reflektorplatte 10 zu ermitteln.

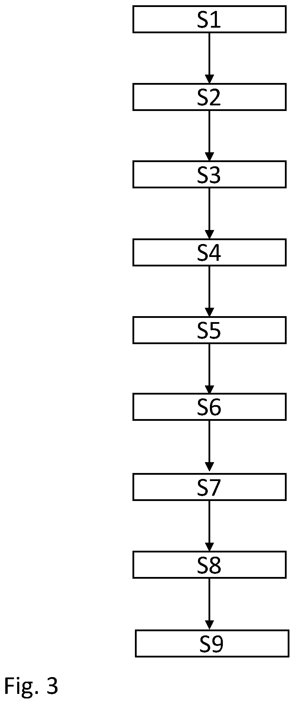

Anhand von Figur 3 wird im Folgenden ein Verfahrensablauf gemäß einem erfindungsgemäßen Beispiel erläutert.

S1: Die Kamera 60 wird mittels des Linearverschiebungsmechanismus 50 automatisch so zur Fahrzeugmitte positioniert, dass das Nummernschild erfasst werden kann. Diese Information wird zur Fahrzeug-, Hersteller- und/oder Modellidentifikation genutzt. Hierfür kann die Steuereinrichtung 12 die erfassten Bildinformationen selbst auswerten oder an die Diagnosevorrichtung 100 zur Auswertung übertragen. Anschließend kann die Diagnosevorrichtung 100 aus einer internen oder aus einer von einem Server abrufbaren Datenbank Kalibrierparameter abrufen, insbesondere hinsichtlich einer einzustellenden Relativausrichtung von der Reflektorplatte 10 zu beispielsweise dem Radarsensor 25.

Alternativ oder zusätzlich können Informationen zur Fahrzeug-, Hersteller- und/oder Modellidentifikation, bspw. wiederum in Form des Kennzeichens, auch manuell in die Diagnosevorrichtung 100 eingegeben werden.

Als eine weitere Vorbereitungsmaßnahme werden nachstehend erläuterte optische Targets 8 an einer Fahrzeugachse bzw. deren Rädern angebracht und/oder an einem Herstelleremblem, dem Radarsensor oder einem anderen herstellerseitig vorgegebenen Referenzpunkt.

Im Anschluss aktiviert der Benutzer den Kalibriervorgang, insbesondere per entsprechender Eingabe z.B. in der Diagnosevorrichtung 100. Darauffolgend wird der Kalibriervorgang wie folgt und vorzugsweise vollständig automatisch ohne weitere manuelle Eingriffe ausgeführt.

S2: Die Reflektorplatte 10 samt ortsfest hierzu positionierter Kamera 60 fährt mittels des Linearverschiebungsmechanismus 50 automatisiert auf eine der beiden Fahrzeugseiten, sodass dort das an einem Fahrzeugrad bzw. einer Fahrzeugachse angebrachte optische Target 8 erfassbar ist.

S3: Es erfolgt eine Wiederholung von S2 auf der zweiten Fahrzeugseite mitsamt automatischem Verschieben bzw. automatischer Translation der Kamera 60 zu der zweiten Fahrzeugseite und eine anschließende automatische Ermittlung der geometrischen Fahrachse anhand der auf beiden Fahrzeugseiten erfassten optischen Targets 8, z.B. in der Steuereinrichtung 12 oder der Diagnosevorrichtung 100. Der Lagewinkel der Reflektorplatte 10 wird mittels des Kippmechanismus 40 daraufhin automatisch so eingestellt, dass die ermittelte geometrische Fahrachse berücksichtigt wird und/oder eine gemäß den in S1 ermittelten Kalibrierparametern vorgegebene Soll-Ausrichtung eingenommen wird.

Insbesondere kann die Reflektorplatte 10 derart verkippt werden, dass sie parallel zur Fahrzeugfront und/oder orthogonal zu einer Fahrzeuglängsachse ausgerichtet ist, wobei Letztere zum Beispiel orthogonal zu der ermittelten Fahrachse verläuft.

S4: Für das automatische Einstellen des korrekten Abstands zwischen der Reflektorplatte 10 und dem Radarsensor 25, wie durch die in S1 ermittelten Kalibrierparameter vorgegeben, können herstellerabhängig vorgegebene unterschiedliche Referenzpunkte erfasst und kann die Kamera 60, sofern erforderlich, hierfür automatisiert mittels des Linearverschiebungsmechanismus 50 verschoben werden. Beispielsweise können diese Referenzpunkte ein optisches Target 8 auf dem Fahrzeugrad sein, ein temporär an der Stoßstange des Fahrzeugs 30 oder an oder nahe dem Radarsensor 25 angebrachtes optisches Target 8, oder dass Herstelleremblem des Fahrzeugs 30. Diese wurde zuvor in Schritt S1 als Vorbereitungsmaßnahme angebracht.

Die Kamera 60 wird automatisch mittels des Linearverschiebungsmechanismus 50 transliert, bis diese das entsprechende Target 8 am Referenzpunkt aufgefunden hat. Bildlich gesprochen wird die Kamera 60 automatisch in einer Art Suchbetrieb verschoben, bis sie das Target 8 erfasst hat.

Aus der Abbildung des Targets 8 im Kamerabild kann mittels bekannter Bildauswertealgorithmen dessen räumliche Position und Lage bestimmt werden. Ist das Target 8 nicht unmittelbar am Radarsensensor 25 angebracht, kann anhand einer bekannten und z.B. von den anfänglich erhaltenen Kalibrierparametern umfassten Relativlage von Referenzpunkt und Radarsensor 25 die räumliche Position und Lage des Radarsensors 25 bestimmt werden, z.B. von der Steuereinrichtung 12 oder der Diagnosevorrichtung 100.

S5: Anschließend wird die Reflektorplatte 10 basierend auf der automatisiert ermittelten räumliche Position und Lage des Radarsensors 25 relativ zu diesem automatisiert im richtigen Abstand mittels des Linearverschiebungsmechanismus 50 positioniert. Die erfoderlichen Bewegungen können wiederum von der Steuereinrichtung 12 oder der Diagnosevorrichtung 100 ermittelt werden. Dies umfasst auch ein Anordnen in einer vorgegebenen Höhe, wie zum Beispiel durch die Kalibrierparameter aus S1 vorgegeben und gegebenenfalls anhand eines der nachstehenden Referenzpunkte definiert und/oder überprüfbar.

S6: Da somit eine Soll-Ausrichtung von Reflektorplatte 10 und Radarsensor 25 vollautomatisiert unter automatischer und aktorischer Ausführung sämtlicher hierfür erforderlicher Bewegungen eingestellt wurde, wird im Anschluss der Kalibrierprozess wiederum automatisch durch die Diagnosevorrichtung 100 mittels einer Ausgabe entsprechender Steuervorgaben an die Steuereinrichtung 12 gestartet.

S7: Die Kalibrierungsmessungen des Radarsensors 25 werden insbesondere bei mittels des Kippmechanismus 40 und gemäß Herstellervorgaben eingestellten unterschiedlichen Lagewinkeln der Reflektorplatte 10 automatisiert durchgeführt. Auch diese Lagewinkel werden wiederum automatisch eingestellt. Wurde in jedem Lagewinkel eine Kalibriermessung durchgeführt, ist der Kalibrierprozess des Radarsensors 25 abgeschlossen.

S8: Sollen weitere Sensoren kalibriert werden, so werden zumindest die Schritte 5-7 für jeden der Sensoren wiederholt.

S9: Die ermittelten und oder eingestellten Ausrichtungsparameter insbesondere der Reflektorplatte 10 und oder der geometrischen Fahrachse werden gemeinsam mit dem Kalibrierungsergebnis durch die Diagnosevorrichtung 100 in einem Kalibrierprotokoll protokolliert. Ein solches Kalibrierprotokoll kann einen Datensatz oder eine allgemeine digitale Informationssammlung umfassen oder bilden, welche mit dem Kalibriervorgang und/oder dem zugrundeliegenden Fahrzeug verknüpft ist, beispielsweise über eine Datenbank. Auf diese Weise kann zu seinem späteren Zeitpunkt die Durchführung des Kalibriervorgangs nachverfolgt werden und können etwaige Fehlerpotentiale automatisiert oder manuell identifiziert werden.

Darauf hinzuweisen ist, dass sämtliche der vorstehenden Verfahrensschritte vollständig automatisiert durchgeführt werden können. Ein Bediener kann hier optional lediglich eine anfängliche grobe Positionierung der Kalibriereinrichtung 1 relativ zum Fahrzeug 30 vornehmen und kann anschließend den automatisiert durchgeführten Kalibriervorgang durch eine Eingabe in die Diagnosevorrichtung 100 starten.

Die automatisiert ausgeführten Maßnahmen umfassen sowohl das Auffinden und Einstellen einer Soll-Relativausrichtung von Reflektorplatte 10 und Radarsensor 25 als auch das anschließende Durchführen von Kalibriermessungen, wobei sämtliche erforderlichen Bewegungen von Reflektorplatte 10 und Kamera 60 automatisiert umgesetzt werden. Insofern kann von einer vollautomatisierten Durchführung des Kalibrierbetriebs gesprochen werden.

## Patentansprüche

1. Anordnung (11) zum Kalibrieren wenigstens eines Radarsensors (25) eines Fahrzeugs (30), wobei die Anordnung (11) eine Kalibriereinrichtung (1) umfasst, mit:
• einer Reflektorplatte (10) zum Reflektieren von Radarstrahlung des Radarsensors (25), und
• wenigstens einer Kamera (60),
wobei die Anordnung (11) dazu eingerichtet, anhand von der Kamera (60) erfassten Bildinformationen Ausrichtungsinformationen betreffend wenigstens eines von dem Fahrzeug (30), dem Radarsensor (25) und der Reflektorplatte (10) zu ermitteln und darauf basierend Steuervorgaben für ein aktorisches Bewegen der Reflektorplatte (10) zu erzeugen.

2. Anordnung (11) nach Anspruch 1 oder 2,
wobei die Kamera (60) ortsfest relativ zu der Reflektorplatte (10) ist.

3. Anordnung (11) nach Anspruch 1 oder 2,
wobei die Kamera (60) außerhalb der Reflektorplatte (10) angeordnet ist und/oder für ein Erfassen von derselbigen eingerichtet ist.

4. Anordnung (11) nach einem der vorangehenden Ansprüche,
ferner umfassend wenigstens einen Kippaktor (14), der dazu eingerichtet ist, nach Maßgabe der Steuervorgaben eine Winkelposition der Reflektorplatte (10) um wenigstens eine Achse (A, B) einzustellen.

5. Anordnung (11) nach Anspruch 4,
wobei die Reflektorplatte (10) mittels des Kippaktors (14) relativ zu der Kamera (60) verkippbar ist.

6. Anordnung (11) nach einem der vorangehenden Ansprüche,
ferner umfassend wenigstens einen Verschiebungsaktor, der dazu eingerichtet ist, die Kamera (60) und/oder die Reflektorplatte (10) entlang wenigstens einer Achse (52) zu verschieben.

7. Anordnung (11) nach einem der vorangehenden Ansprüche,
wobei die Kamera (60) und die Reflektorplatte (10) mittels des Verschiebungsaktors gemeinsam verschiebbar sind, insbesondere parallel zu einem Untergrund (3) und/oder entlang eines gegenüberliegenden Fahrzeugbereichs.

8. Anordnung (11) nach einem der vorangehenden Ansprüche,
ferner umfassend: wenigstens ein von der Kamera (60) erfassbares Target (8), das an dem Fahrzeug (30) und/oder an dem Radarsensor (25) anbringbar ist.

9. Anordnung (11) nach einem der vorangehenden Ansprüche,
wobei die Steuereinrichtung (12) ferner dazu eingerichtet ist, anhand der Bildinformationen auch wenigstens eine der folgenden Informationen zu ermitteln:
• einen Fahrzeughersteller,
• einen Fahrzeugtypen,
• ein Fahrzeugkennzeichen,
• eine geometrische Fahrachse des Fahrzeugs (30),
• einen Abstand zwischen der Reflektorplatte (10) und dem Radarsensor (25).

10. Verfahren zum Kalibrieren wenigstens eines Radarsensors (25) eines Fahrzeugs (30) mittels einer Reflektorplatte (10) zum Reflektieren von Radarstrahlung des Radarsensors (25), wobei das Verfahren aufweist:
• Erfassen von Bildinformationen mittels einer Kamera (60),
• Ermitteln von Ausrichtungsinformationen betreffend das Fahrzeug (30) und/oder den Radarsensor (25) und/oder die Reflektorplatte (10) anhand der Bildinformationen;
• aktorisches Bewegen der Reflektorplatte (10) nach Maßgabe der Ausrichtungsinformationen.

11. Verfahren nach Anspruch 10,
wobei das aktorische Bewegen ein Verkippen der Reflektorplatte (10) um wenigstens eine Achse (A, B) umfasst.

12. Verfahren nach Anspruch 10 oder 11,
wobei das aktorische Bewegen ein Verschieben der Reflektorplatte (10) entlang wenigstens einer Achse (52) umfasst.

13. Verfahren nach einem der vorangehenden Ansprüche,
wobei die Kamera (60) zum Erfassen der Bildinformationen zwischen einer ersten Position und wenigstens einer zweiten Position bewegt wird.

14. Verfahren nach Anspruch 13,
wobei die Kamera (60) in der ersten Position Bildinformationen von einer erste Fahrzeugseite und/oder einem dort angeordneten Target (8) erfasst und in der in der zweiten Position Bildinformationen von einer zweiten Fahrzeugseite und/oder einem dort angeordneten Target (8).

15. Verfahren nach einem der vorangehenden Ansprüche,
wobei anhand der Bildinformationen auch wenigstens eine der folgenden Informationen ermittelt wird:
• ein Fahrzeughersteller,
• ein Fahrzeugtyp,
• ein Fahrzeugkennzeichen,
• eine geometrische Fahrachse des Fahrzeugs (30),
• ein Abstand zwischen der Reflektorplatte (10) und dem Radarsensor (25).
